# EUROPEAN PATENT APPLICATION

(11) **EP 3 318 390 A1**
(43) Date of publication of application: **09.05.2018**
(21) Application number: 16818082.6
(22) Date of filing: 01.07.2016
(51) Int. Cl.: B29C 65/08

(54) **BONDED BODY AND METHOD FOR PRODUCING BONDED BODY**

(30) Priority: 02.07.2015 JP 2015133977
(71) Applicant: Konica Minolta, Inc., Tokyo 100-7015 (JP)
(72) Inventor: TAGAWA, Tomohiko, Tokyo 100-7015 (JP)
(74) Representative: Gille Hrabal
(86) International application number: PCT/JP2016/069717
(87) International publication number: WO 2017/002974

(57) **Abstract**

There is provided a joined body including an optical device 10 made of a thermoplastic resin as a first member and a substrate 20 made of an inorganic material as a second member, and having a molecular adhesive layer 30 between the optical device 10 and the substrate 20. The optical device 10 is locally melted with ultrasonic waves, thereby chemically being joined to the substrate 20 via the molecular adhesive layer 30.

## Description

### Technological Field

The present invention relates to a joined body including a thermoplastic resin and an inorganic material and a method for producing the joined body.

### Background

As a method for joining an organic material and another member, there is a method for welding thermoplastic resins with ultrasonic waves (refer to, e.g. , Patent Literature 1). In addition, as another method for joining an organic material and another member, there is a method for joining an organic base material and an inorganic base material by using a resin containing a silane coupling agent or a primer containing a silane coupling agent (refer to, e.g., Patent Literatures 2 and 3). Further, as another method for joining an organic material and another member, there is a method for joining only a target position with a method for joining different materials by using laser beams (refer to, e.g., Patent Literature 4).

However, with the joining method according to Patent Literature 1, parts in which ultrasonic waves are strongly operated each other in a target resin are melted to integrally bond the parts, and the method is not suitable for joining members containing a resin material at different melting points or members different from a resin.

Further, with the joining methods according to Patent Literatures 2 and 3, since there is a composition other than the base material on a joining interface, the environmental resistance of a joining member (specifically, resin or primer) should be considered in addition to the environmental resistance of the base material. For example, in an aspect of hygroscopicity, if the hygroscopicity of the joining member is higher than that of the inorganic base material, there is danger that the joining member might swell and a joined portion might be peeled. Further, if the hygroscopicity of the joining member is low, there is danger that the joining member might be broken because it is not resistant against a swelling load of the organic base material. Furthermore, in order to replicate a preferable state of joining in mass production, each content of the silane coupling agent and the joining member at time of mixing thereof should be managed. In addition, crimping methods with surfaces according to Patent Literatures 2 and 3 are suitable for joining a sheet or a film, but it is hard to partially join a shaped part because heat cannot be uniformly conducted.

Moreover, with the joining method according to Patent Literature 4, the joining is limited to that of a material for absorbing laser beams and a material through which laser beams are transmitted, and it is hard to join, e.g., transparent members or black members.

### Citation List

### Patent Literature

[Patent Literature 1] WO 2002/084407
[Patent Literature 2] Japanese Patent Laid-Open No. 2013-98377
[Patent Literature 3] WO 1998/15401
[Patent Literature 4] Japanese Patent Laid-OpenNo. 2011-235570

### Summary

It is an object of the present invention to provide a joined body that is formed by partially joining mutually different members, i.e. , a thermoplastic resin and an inorganic material in a preferable joining state.

Further, it is another object of the present invention to provide a method for producing such a joined body.

In order to solve the aforementioned problems, a joined body according to the present invention includes a first member made of a thermoplastic resin and a second member made of an inorganic material, a molecular adhesive layer is provided between the first member and the second member, and the first member is locally melted with ultrasonic waves, thereby chemically being joined to the second member via the molecular adhesive layer. Herein, the molecular adhesive layer includes a single member of an adhesive that is covalently bonded to both the first and second members, and does not include another adhesive member.

With the joined body, chemical bond (specifically, covalent bond) using the molecular adhesive layer enables joining of mutually different members, i.e., the thermoplastic resin and the inorganic material. The molecular adhesive can obtain stable bonding force because another joining member is not mixed, e.g., only a silane coupling agent. Further, the molecular adhesive layer is covalently bonded, and the positional shift between the first and second members can therefore be prevented without generating contraction or the like at hardening time, as compared with an adhesive layer that is not covalently bonded. Further, it is not required that the joining via the molecular adhesive layer is fixed until finishing hardening reaction like the adhesive layer that is not covalently bonded, and the joining can be performed for a relatively short time by appropriately setting a condition such as joining temperature or a cooling method. Furthermore, since the first and second members are joined by using ultrasonic waves, local joining is possible. Because of a minute amount of the thermoplastic resin melted at the joining time, the amount of contraction of the melted resin is extremely smaller than the amount of contraction in a case of hardening an adhesive that is wholly liquid, and thermal influence at hardening and contraction time or melting time is extremely small. Therefore, it is hard to exert influence on the positional shift between the first and second members.

With a method for producing a joined body according to the present invention, a molecular adhesive layer is arranged to a surface facing a first member made of a thermoplastic resin in a second member made of an inorganic material, and the first member is locally melted with ultrasonic waves and is chemically joined to the second member via the molecular adhesive layer.

With the method for producing the joined body, it is possible to stably join mutually different members, i.e., the thermoplastic resin and the inorganic material by chemical bond (covalent bond) using the molecular adhesive layer. Further, contraction or the like is not generated in the molecular adhesive layer at the hardening time, and it is possible to prevent the positional shift between the first and second members. Further, the joining via the molecular adhesive layer can be performed for a relatively short time. Furthermore, since the first and second members are joined by using ultrasonic waves, local joining is possible. Because of a minute amount of the thermoplastic resin melted at the joining time, thermal influence at the hardening and contraction time or the melting time is extremely small, and it is hard to exert influence on the positional shift between the first and second members.

### Brief Description of Drawings

FIG. 1A is a cross-sectional view of a light source unit including a joined body according to a first embodiment, and FIG. 1B is a plan view of the joined body illustrated in FIG. 1A.
FIG. 2A is a partially enlarged cross-sectional view of the joined body in FIG. 1, and FIG. 2B is a diagram illustrating a connecting relationship among a first member, a molecular adhesive layer, and a second member.
FIGS. 3A to 3C are diagrams illustrating a method for producing the joined body.
FIG. 4 is a diagram illustrating joining with ultrasonic waves.
FIG. 5A is a perspective view of a light source unit including a joined body according to a second embodiment, FIG. 5B is a cross-sectional view of the joined body illustrated in FIG. 5A viewed by an arrow AA, and FIG. 5C is a diagram illustrating a modified example of the light source unit in FIG. 5A.
FIG. 6 is a diagram illustrating an image forming unit that includes the light source unit illustrated in FIG. 5A and the like.
FIG. 7 is a cross-sectional view of a light source unit including a joined body according to a third embodiment.
FIG. 8 is a partially enlarged cross-sectional view of a joined body according to a fourth embodiment, FIG. 8A is a diagram illustrating the first member before the joining, and FIG. 8B is a diagram illustrating the joined body after the joining.
FIG. 9A is a cross-sectional view of a light source unit including a joined body according to a fifth embodiment, and FIG. 9B is a diagram illustrating the first member before the joining in FIG. 9A.
FIG. 10 is a cross-sectional view of a light source unit including a joined body according to a sixth embodiment.
FIG. 11 is a diagram illustrating a modified example of the light source unit including the joined body.

### Detailed Description of Embodiments

### [First Embodiment]

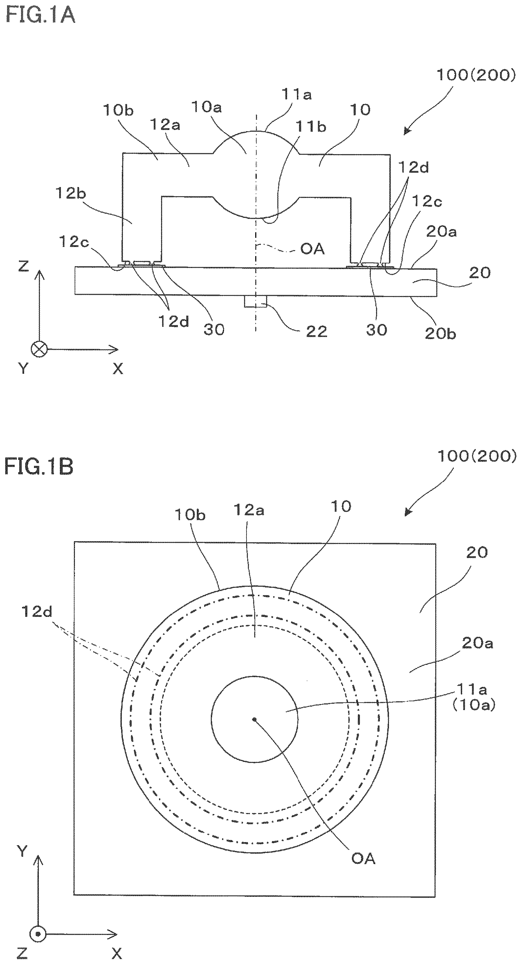

Hereinbelow, a description will be given of a joined body or the like according to a first embodiment of the present invention with reference to the drawings. As illustrated in FIGS. 1A and 1B, a joined body 100 has an optical device 10 as a first member and a substrate 20 as a second member. The optical device 10 and the substrate 20 are laminated or stacked and bonded in the Z-axis direction vertical to an XY surface. By arranging a light emitting device 22 to, e.g. , the substrate 20, the joined body 100 can be used as a light source unit 200.

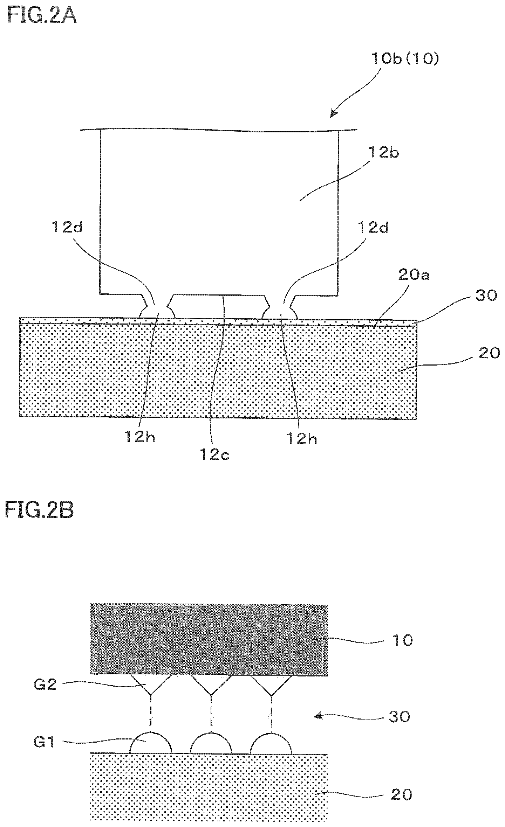

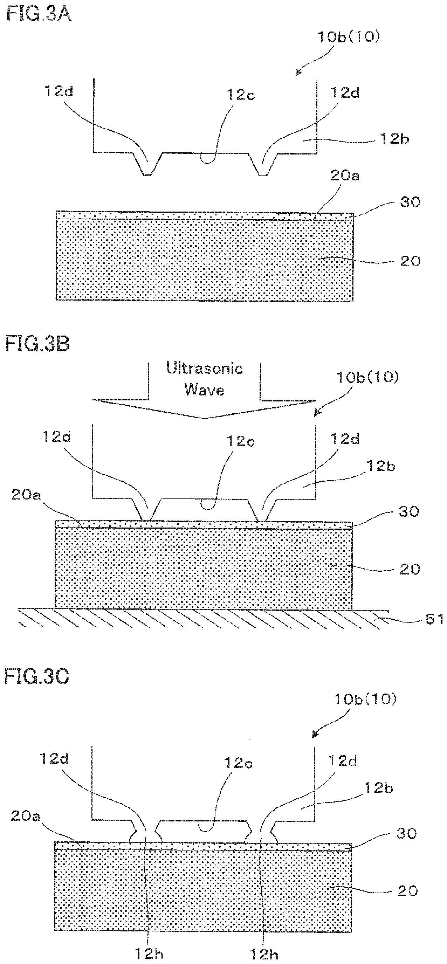

The optical device (first member) 10 is a member with optical transparency through which light within a wavelength range to be used can be transmitted, e.g. , a transparent member in a case where light within a visible light area is transmitted. The optical device 10 is formed of a thermoplastic resin as an organic material. The thermoplastic resin is melted with vibration energy generated by ultrasonic waves, using, for example, cyclo olefin polymer (COP), acrylic (PMMA), polycarbonate (PC), or the like. The optical device 10 has an approximately circular contour viewed in an optical axis OA direction. The optical device 10 has a lens element 10a and a supporting unit 10b that supports the lens element 10a from the periphery. The lens element 10a is, e.g., a both-convex aspherical lens, and has a first optical surface 11a and a second optical surface 11b. The supporting unit 10b has a plate-shaped flat part 12a and a ring-shaped frame part 12b that is extended in parallel with the optical axis OA from the outer periphery of the flat part 12a. Projected portions 12d are formed to an end surface 12c of the frame part 12b on the side of the substrate 20. The projected portions 12d are formed to a part for joining the optical device 10 and the substrate 20. In an example illustrated in the drawing, the projected portions 12d are double-circular. Note that the arrangement of the projected portion 12d is not limited to the circular shape, and may be, e.g., linear-shaped in the direction vertical to the optical axis OA, radial with the optical axis OA as center, or dot-shaped. Further, the cross-sectional shape of the projected portion 12d before the joining is not limited to be trapezoidal as illustrated in FIG. 3A, and may be, e.g., triangle, hemispherical, semi-elliptical, or the like. The projected portions 12d and the substrate 20 are chemically joined via a molecular adhesive layer 30. As enlarged and illustrated in FIG. 2A, the tip of the projected portions 12d are melted with ultrasonic waves, and a melted mark 12h as the melted part locally joins the optical device 10 and the substrate 20. The optical device 10 is used as, e.g., a condenser lens.

The substrate (second member) 20 is a transparent plate-shaped member with optical transparency, and a glass substrate made of glass as an inorganic material. The optical device 10 is joined to a first surface 20a of the substrate 20. Further, as already described, in an example illustrated in the drawing, the light emitting device 22 is arranged to a second surface 20b of the substrate 20. The center of the light emitting device 22 is arranged on the optical axis OA of the optical device 10. As the light emitting device 22, e.g., an organic EL, an LED device, or the like is used.

On the substrate 20, before joining the optical device 10, the first surface 20a as a surface facing the optical device 10 is subjected to surface processing for activating molecules in advance. The surface processing is partly or wholly performed to the first surface 20a. As the surface processing or treatment, e.g., corona processing, plasma processing, ozone processing, ultraviolet (UV) processing, or the like is performed. As a consequence, the bonding force between the optical device 10 and the substrate 20 can be more strengthened. Note that the end surface 12c (particularly, tip of the projected portion 12d) of the frame part 12b in the optical device 10 may also be subjected to the surface processing for activating the molecules. Both the substrate 20 and the optical device 10 are subjected to the surface processing, thereby further strengthening the bonding force. Note that the above surface processing may not be given to the substrate 20 and the optical device 10, and the surface may be only wiped and cleaned with isopropyl alcohol (IPA) or the like.

The molecular adhesive layer 30 is arranged between the optical device 10 and the substrate 20, specifically, on the first surface 20a of the substrate 20. The molecular adhesive layer 30 may also be arranged to a position corresponding to the frame part 12b of the optical device 10, or the whole first surface 20a of the substrate 20. Herein, the molecular adhesive layer 30 includes a single member of an adhesive with covalent bond to both the optical device 10 and the substrate 20, and does not include another adhesive member. FIG. 1A or the like illustrates that, for convenience of the description, the molecular adhesive layer 30 has the thickness. However, actually, the molecular adhesive layer 30 has a molecule size, and does not need to consider the hardening and contraction of the adhesive. As illustrated in FIG. 2B, the substrate 20 and the molecular adhesive layer 30 are bonded with covalent bond G1 through hydrolysis reaction and condensation reaction of a hydrolyzable group of the molecular adhesive. The optical device 10 and the molecular adhesive layer 30 are bonded with covalent bond G2 through a predetermined reaction of an organic functional group of the molecular adhesive. In the joined body 100 both of the optical device 10 and the substrate 20 are covalently bonded (chemically bonded), and the environment resistance is thus high. As the molecular adhesive forming the molecular adhesive layer 30, for example, an adhesive containing silanol or the like, specifically, a silane coupling agent or the like is used.

As already described, in the joined body 100, the optical device 10 is locally melted with ultrasonic waves, thereby being joined to the substrate 20 at portions of the projected portions 12d via the molecular adhesive layer 30. That is, only portions to be bonded of the optical device 10 and the substrate 20 are bonded. With ultrasonic waves, heat is generated in a joining interface between the optical device 10 and the substrate 20, and the resin is melted. As a result, the molecular adhesive layer 30 is chemically reacted, and is chemically bonded to the optical device 10 and the substrate 20.

Hereinbelow, a description will be given of the method for producing the joined body. First, the optical device 10 as the first member is formed. As a forming method, injection forming or molding, mold forming, or the like is used. As illustrated in FIG. 3A, the projected portion 12d is formed to the end surface 12c of the frame part 12b in the optical device 10.

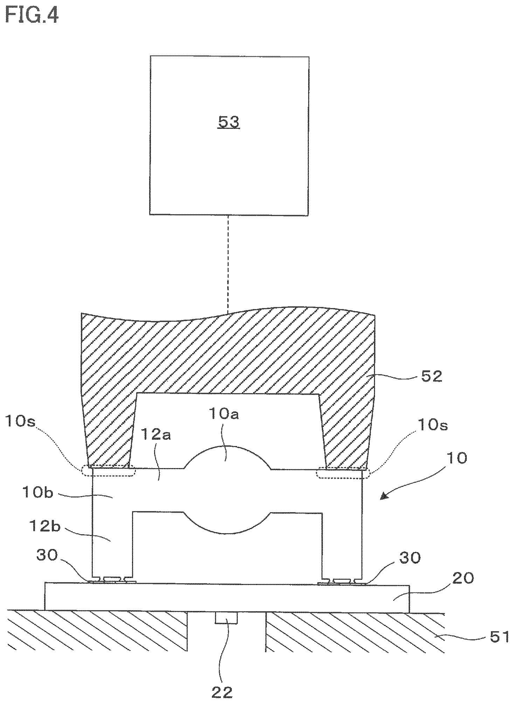

Next, the substrate 20 as the second member is prepared. The first surface 20a of the substrate 20 is subjected to the surface processing for activating molecules, specifically, corona processing, plasma processing, ozone processing, ultraviolet (UV) processing, or the like. Thereafter, the first surface 20a is coated with the molecular adhesive to form the molecular adhesive layer 30. Specifically, the silane coupling agent is dissolved in water, organic solvent, or the like, which is applied to the whole first surface 20a of the substrate 20 or a predetermined part including an area facing the projected portion 12d with a method such as dipping, spraying, spin coating, or the like, and is dried. In a case where the joined body 100 is used for application of the light source unit 200, the light emitting device 22 is attached to the second surface 20b of the substrate 20 (refer to FIG. 4). In this case, preferably, the light emitting device 22 is attached to the substrate 20 before executing the processing. As mentioned above, the first surface 20a may be subjected to the surface processing for activating the molecules before forming the molecular adhesive layer 30 or after the formation thereof. In a case where the surface processing is performed after forming the molecular adhesive layer 30, the surface of the molecular adhesive layer 30 can be subjected to the surface processing, or the surface of the tip of the projected portion 12d or the like can also be subjected to the surface processing.

Next, as illustrated in FIG. 3B or the like, the optical device 10 and the substrate 20 are joined with ultrasonic waves. An ultrasonic-waves welding machine is used for joining (refer to FIG. 4). The substrate 20 is fixed onto a supporting base 51 of the ultrasonic-waves welding machine. The optical device 10 may be fixed from a side surface in a state of being positioned on the first surface 20a of the substrate 20. Thereafter, as illustrated in FIG. 4, a tool horn 52 of the ultrasonic-waves welding machine is pressed to an end surface 10s of the optical device 10 from the direction of the optical axis OA. Pressing force from the direction of the optical axis OA is a degree (e.g., 1 N to 100 N) for sufficiently transmitting ultrasonic vibration to the optical device 10. Further, a frequency of ultrasonic waves is, e.g., 10 kHz to 30 kHz, and joining time is, e.g., 0.1 sec to 5 sec. As illustrated in FIG. 3B, in a state in which the optical device 10 is laminated or stacked on the substrate 20, the projected portion 12d of the optical device 10 first comes into contact with the substrate 20. As illustrated in FIGS. 3B and 4, an ultrasonic-waves oscillator 53 of the ultrasonic-waves welding machine is operated, thereby generating heat in a joining interface (specifically, the tip and the periphery of the projected portion 12d) between the optical device 10 and the substrate 20. As illustrated in FIG. 3C, the resin of the tip of the projected portion 12d of the optical device 10 is melted. In this case, the thermoplastic resin of the optical device 10, glass of the substrate 20, and the silane coupling agent as the molecular adhesive layer 30 are chemically reacted, and are chemically bonded. The resin is melted at a contact portion with the substrate 20. Therefore, only a part of the projected portion 12d is locally joined. The contact part between the optical device 10 and the substrate 20 is local and the amount of the resin melted in the projected portion 12d is thus miner. Thermal influence at the hardening and contraction time or the melting time is extremely small. The ultrasonic vibration ends and the cooling is performed, thereby finishing the joined body 100 obtained by joining the optical device 10 and the substrate 20 or the light source unit 200. Note that a series of processes of the surface processing, the formation of the molecular adhesive layer 30, and the joining with ultrasonic waves may be performed under the same atmosphere (e.g., under inert atmosphere), or may not be performed under the same atmosphere if an effect of the surface processing is not lost.

With the above-described joined body, the thermoplastic resin and the inorganic material, that is, mutually different members (the optical device 10 as the first member and the substrate 20 as the second member) can be joined by chemical bond (specifically, covalent bond) using the molecular adhesive layer 30. The molecular adhesive layer 30 can obtain stable bonding force because, e.g. , only a silane coupling agent, that is, another joining member is not mixed. Further, the molecular adhesive layer 30 is covalently bonded and thus the contraction and the like are not generated at the hardening time, as compared with an adhesive layer that is not covalently bonded and the positional shift between the optical device 10 and the substrate 20 can be prevented. Further, the joining via the molecular adhesive layer 30 does not need fixing until finishing hardening reaction like an adhesive layer that is not covalently bonded, and can be performed for a relatively short time by appropriately setting a condition such as joining temperature or a cooling method. Furthermore, since the optical device 10 and the substrate 20 are joined by using ultrasonic waves, a target portion can be locally (or selectively) joined. Since the amount of thermoplastic resin melted at the joining time is minute, the amount of contraction of the melted resin is much smaller than the amount of contraction in a case of hardening an adhesive that is wholly liquid, and thermal influence is extremely small at the hardening and contraction time or the melting time. Therefore, it is hard to exert influence on the positional shift between the optical device 10 and the substrate 20.

Further, the optical device 10 as the first member has the projected portion 12d on the side of the substrate 20 as the second member at least before the joining. In this case, the projected portion 12d is formed to a portion to be joined. Before the joining, the projected portion 12d comes into contact with the substrate 20, and the projected portion 12d is melted with ultrasonic waves, thereby joining only the portion to be bonded. Further, if the joining is performed between, e.g. , the plurality of projected portions 12d so as to sandwich an air layer, it is possible to reduce the influence of the difference in thermal expansion between the optical device 10 and the substrate 20.

Furthermore, even if the optical device 10 as the first member and the substrate 20 as the second member are transparent members with optical transparency, the resin is melted by using ultrasonic waves and a joining state is therefore preferable. That is, the joining can be performed, irrespective of colors of the optical device 10 and the substrate 20, and both the optical device 10 and the substrate 20 are not limited to transparent members, and may also use black members.

Moreover, regarding the joining in which the resin is melted and which is performed via the molecular adhesive layer 30, a member with optical transparency, for which distortion is not preferable, also with the environment resistance is suitable for joining with, in particular, a member with high importance about the positional shift is suitable. Even with the joined body 100 formed by combining the optical device 10 made of the resin as the first member and the substrate 20 made of the glass as the second member, a preferable joining state can be accomplished.

### [Example 1]

Hereinbelow, a description will be given of Example 1 of the present embodiment. In this Example 1, the first member was formed as a sample with injection molding by using a thermoplastic resin. For sake of simplification, the first member was not the optical device but a quadratic-prism member. Regarding dimensions of a projected portion, the height was 1 mm, the width was 1 mm, and the length was 5 mm. The projected portion was formed by aligning two columns with triangular cross-section, and the interval between the tips of the two projected portions was 3 mm. Cyclo olefin polymer (COP) (ZEONEX E48R (manufactured by ZEONEX CORPORATION)), polycarbonate (PC) (PC1600 (manufactured by TAKIRON Co. , LTD.)), and acrylic resin (PMMA) (Deraglass (trademark) K (manufactured by ASAHIKASEI TECHNOPLUS Corporation) were used for the thermoplastic resin. As the second member, a glass plate was used. For a first surface as the joining interface of the second member with the first member, there were prepared a member that was subjected to the surface processing for activating molecules and a member that was not subj ected to the surface processing for activating molecules. In the surface processing for activating molecules, UV ozone cleaning or plasma cleaning was performed. The UV ozone cleaning was performed under conditions that a UV wavelength (185-253 nm) was used, an irradiation distance was 10 mm, and cleaning time was 5 min. The plasma cleaning was performed under conditions that pressure was 10 Pa, an output was 150 W, and cleaning time was 10 sec. Note that in the second member that was not subjected to the surface processing for activating molecules, the first surface was wiped out with IPA and was cleaned. After the processing, the first surface of the second member was coated with a molecular adhesive, and the molecular adhesive layer was formed. An adhesive containing silanol (silane coupling agent SZ-6300 (manufactured by Dow Corning Toray Co., Ltd.) or a silane coupling agent Z-6011 (manufactured by Dow Corning Toray Co. , Ltd.)) was used for the molecular adhesive. Thereafter, the first member and the second member were joined with ultrasonic waves, thereby producing the joined body. An ultrasonic-waves welding machine (SONOPET∑600S (manufactured by SEIDENSHA ELECTRONICS CO., LTD.) was used for the joining. The joining was performed under conditions that the frequency of ultrasonic waves was 30 kHz, the load of the tool horn 52 was 100 N, and the joining time was 0.3 sec.

Table 1 shows a joining state of the first member and the second member. In Table 1, regarding the molecular adhesive, a silane coupling agent SZ-6300 is expressed as "A", and a silane coupling agent Z-6011 is expressed as "B". Evaluation of the joining state of the joined body is determined with joining force at time for peeling or breaking of the first and second members. The joining force was measured by using a pull gauge while the second member was fixed, and the first member was chucked by using a jig and was vertically pulled up. Measuring results are evaluated that ON≤F<2N is failing ("christcross" mark), 2N≤F<25N is passing ("triangle" mark), 25N≤F<50N is good ("single-circle" mark), and 50N≤F is excellent ("double-circle" mark) where F is the joining force.

**[Table 1]**

| Processing of joining interface | Molecular Adhesive | 1st member | Evaluation |
|---|---|---|---|
| None | A | COP | Δ |
| None | A | PC | Δ |
| None | A | PMMA | Δ |
| None | B | COP | Δ |
| None | B | PC | Δ |
| None | B | PMMA | Δ |
| UV ozone cleaning | A | COP | Δ |
| UV ozone cleansing | A | PC | ⊚ |
| UV ozone cleaning | A | PMMA | ⊚ |
| UV ozone cleaning | B | COP | ○ |
| UV ozone cleaning | B | PC | ⊚ |
| UV ozone cleaning | B | PMMA | ⊚ |
| Plasma cleanig | A | COP | ○ |
| Plasma cleanig | A | PC | ⊚ |
| Plasma cleanig | A | PMMA | ⊚ |
| Plasma cleanig | B | COP | ⊚ |
| Plasma cleanig | B | PC | ⊚ |
| Plasma cleanig | B | PMMA | ⊚ |

As illustrated in Table 1, it can be understood that the joined body has the joining force of 2N≤F by joining the first and second members via the molecular adhesive layer with ultrasonic waves. Further, it can be understood that by performing the surface processing for activating molecules, the joining force of the joined body having the first and second members can be more strengthened. Note that, for the sake of comparison, the first member and the second member were adhered by using an acrylic-based photocurable adhesive, and the strength of the joined body was thus failing ("christcross" mark) irrespective of the presence or absence of the surface processing.

### [Second Embodiment]

Hereinbelow, a description will be given of a joined body according to a second embodiment. Note that the joined body according to the second embodiment is obtained by partly changing the joined body according to the first embodiment, and matters that are not particularly described are similar to those according to the first embodiment.

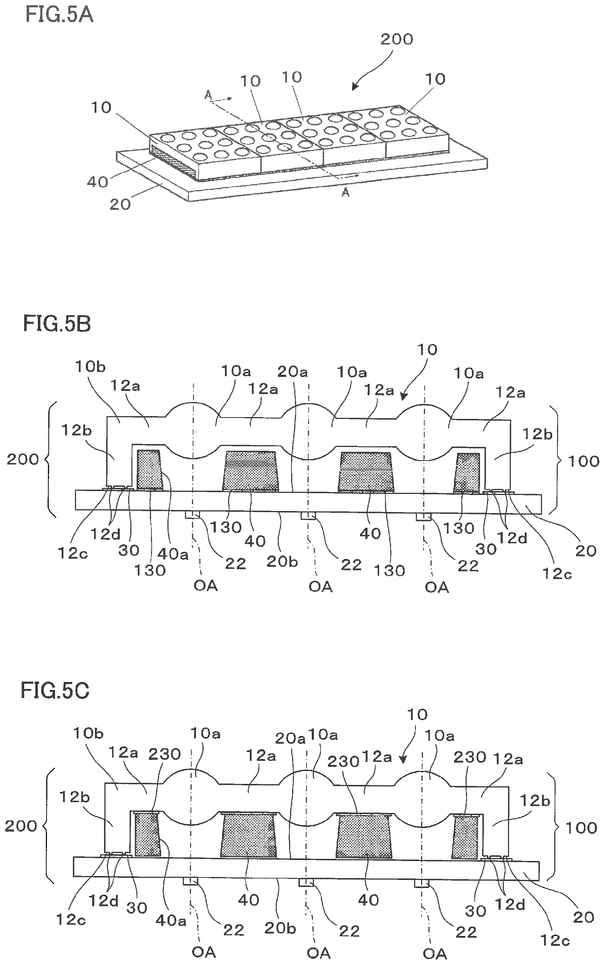

As illustrated in FIGS. 5A and 5B, in the present embodiment, the optical devices 10 as the plurality of first members are locally joined to the substrate 20 as one second member via the molecular adhesive layer 30. Further, a light-shielding member 40 is arranged between the substrate 20 and the optical device 10. The light source unit 200 including the joined body 100 is used for, for example, a print head and the like.

One optical device 10 has square contour viewed in the direction of the optical axis OA. The optical device 10 has the plurality of lens elements 10a and the supporting unit 10b that peripherally supports the plurality of lens elements 10a. The lens elements 10a are arranged like an array. The supporting unit 10b has the frame part 12b extended in the vertical direction to the flat part 12a from two facing sides of the plate-shaped flat part 12a. The projected portion 12d is formed to the end surface 12c of the frame part 12b.

The plurality of light emitting devices 22 is arranged like an array at positions corresponding to the lens elements 10a of the optical device 10 on the second surface 20b of the substrate 20.

The light-shielding member 40 is a plate-shaped member, and shields unnecessary light from the light emitting device 22. As the light-shielding member 40, for example, a substrate made of a glass or a resin containing light-absorbing particles of black or the like, a metallic substrate coated to black, or the like is used. An opening 40a is formed to the light-shielding member 40 in a position corresponding to the lens element 10a of the optical device 10. The light-shielding member 40 is joined to the side of the substrate 20. Although the light-shielding member 40 may be adhered with an adhesive other than the molecular adhesive, the light-shielding member 40 may be joined by using ultrasonic waves depending on combination of materials, similarly to the joining of the optical device 10 and the substrate 20. For example, if the material of the light-shielding member 40 is resin different from the inorganic material as the material of the substrate 20, the joining is possible via a molecular adhesive layer 130.

In the manufacturing of the joined body 100, in a state in which the plurality of optical devices 10 is all aligned on the first surface 20a of the substrate 20, the optical devices 10 may be joined once with ultrasonic waves or the optical devices 10 may be aligned on the unit basis of one or several devices and be joined with ultrasonic waves individually at plural times.

With the above-mentioned joined body 100, the joining using ultrasonic waves can be performed for a relatively short time. Therefore, if a plurality of optical devices (first members) 10 may be joined once or individually at plural times, the joining can be performed for a relatively short time, and the productivity is high.

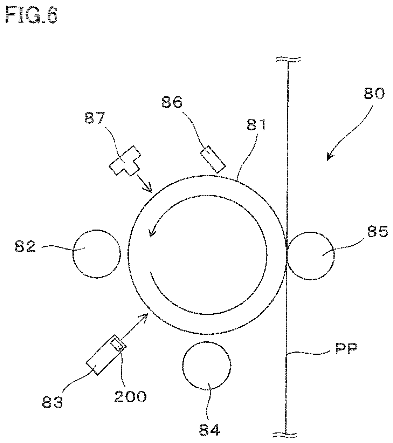

As illustrated in FIG. 6, the light source unit 200 including the joined body 100 is arranged to an image forming unit 80 included in, e. g. , an electrophotographic printer as an image forming apparatus. The image forming unit 80 transfers toner for development to paper. A photosensitive member 81, a charge roller 82, a print head 83, a developing device 84, a transfer device 85, a cleaning device 86, and a neutralizing device 87 are arranged to the image forming unit 80. Among those, the light source unit 200 is arranged to the print head 83. In the image forming unit 80, the other members 82 to 87 are operated to the photosensitive member 81, thereby forming an image to paper PP.

Note that, in the above-described embodiment, as illustrated in FIG. 5C, the light-shielding member 40 is not only joined to the side of the substrate 20, but may also be joined to the side of the optical device 10. In this case, even if a material of the light-shielding member 40 is any of resin, glass, and metal, the light-shielding member 40 can be joined via a molecular adhesive layer 230.

### [Third Embodiment]

Hereinbelow, a description will be given of a joined body according to a third embodiment. Note that the joined body according to the third embodiment is obtained by partly changing the joined body according to the first embodiment, and matters that are not particularly described are similar to those according to the first embodiment.

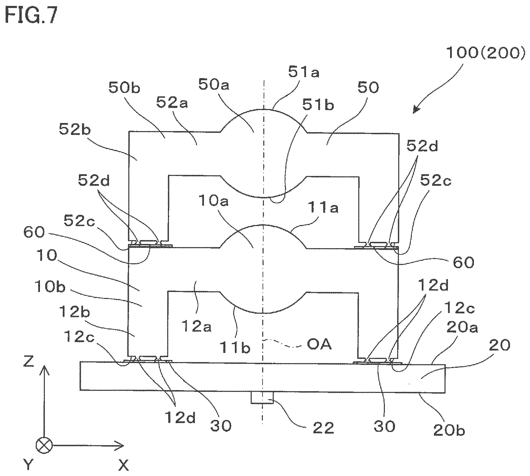

As illustrated in FIG. 7, in the present embodiment, the joined body 100 has not only the optical device 10 as the first member and the substrate 20 as the second member, but also an optical device 50 as a third member. The optical device 50 is overlapped and joined to the optical device 10, that is, in a state in which the optical device 50 is further joined to the optical device 10 to which the substrate 20 has been joined. The optical device 50 is a transparent member with optical transparency, similarly to the optical device 10, and is made of a thermoplastic resin as the organic material. In an example illustrated in the diagram, the shape of the optical device 50 is similar to the shape of the optical device 10, but can be appropriately changed. The optical device 50 has a lens element 50a and a supporting unit 50b that peripherally supports the lens element 50a. The lens element 50a is, for example, a both-convex aspherical lens, and has a third optical surface 51a and a fourth optical surface 51b. The supporting unit 50b has a plainer plane part 52a and a circular frame part 52b extended from the plane part 52a in parallel with the optical axis OA. A projected portion 52d is formed to an end surface 52c of the frame part 52b on the side of the optical device 10. That is, in the optical device 50 (third member), the projected portion 52d is provided on the side of the optical device 10 (first member). Local melting with ultrasonic waves in melting with ultrasonic-wave welding enables resins to be welded. However, here, the local melting with ultrasonic waves enables local chemical joining of the projected portion 52d of the optical device 50 and the supporting unit 10b of the optical device 10 via a molecular adhesive layer 60. As a consequence, it is possible to obtain the joined body 100 wherein the two optical devices 10 and 50 are laminated or stacked onto the substrate 20.

Note that also in the present embodiment, like the second embodiment, the plurality of optical devices 10 and 50 may be aligned to one substrate 20.

### [Fourth Embodiment]

Hereinbelow, a joined body according to a fourth embodiment will be described. Note that the joined body according to the fourth embodiment is obtained by partly changing the joined body according to the first embodiment, and matters that are not particularly described are similar to those according to the first embodiment.

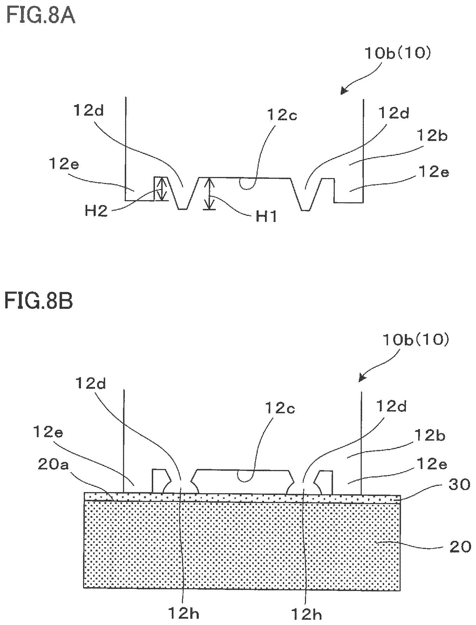

As illustrated in FIGS. 8A and 8B, in the present embodiment, not only the projected portions 12d but also leg portions 12e are formed to the end surface 12c of the frame part 12b on the side of the substrate 20. The projected portions 12d are arranged in a state of being sandwiched by the leg portions 12e. As illustrated in FIG. 8A, height H1 of the projected portions 12d is higher than height H2 of the leg portions 12e before the joining. On the other hand, as illustrated in FIG. 8B, the projected portions 12d have approximately the same height as that of the leg portions 12e in a state of being melted. At the joining time, if the projected portions 12d are melted with ultrasonic waves and application of ultrasonic waves ends when the leg portions 12e come into contact with the substrate 20, the optical device 10 is more stably supported with the leg portions 12e. Note that the position of the leg portions 12e can be appropriately changed by the shape of the optical device 10, for example, in a case of the optical device 10 having the plurality of lens elements 10a, the leg portions 12e may also be provided between the lens elements 10a.

### [Fifth Embodiment]

Hereinbelow, a joined body according to a fifth embodiment will be described. Note that the joined body according to the fifth embodiment is obtained by partly changing the joined body according to the first embodiment, and matters that are not particularly described are similar to those according to the first embodiment.

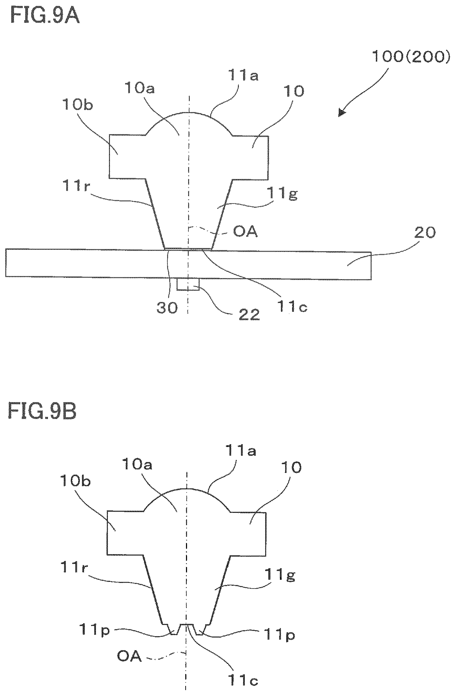

As illustrated in FIG. 9A, in the present embodiment, the optical device 10 as the first member and the substrate 20 as the second member are joined in a contact state with each other.

In the optical device 10, the lens element 10a has a light guiding unit 11g on the side of the substrate 20, in place of the second optical surface 11b according to the first embodiment. The light guiding unit 11g is column-shaped, and has a flat surface 11c at the bottom end. The light guiding unit 11g may be cylinder or prismatic column-shaped, and may have a taper or not. As illustrated in FIG. 9B, a projected portion 11p is arranged to the flat surface 11c of the light guiding unit 11g. Further, a light-shielding unit 11r for preventing entering of ambient light is formed to a side surface of the light guiding unit 11g. The light-shielding unit 11r is formed, for example, by adhering a black light-shielding film, forming a black light-shielding film, or performing emboss processing. The light guiding unit 11g corresponds to the individual lens elements 10a, and when the light emitting device 22 emits light in the light source unit 200 including the joined body 100, the light passes through the substrate 20, the light guiding unit 11g, and the lens element 10a, is emitted from the first optical surface 11a, and forms an image.

In the joining of the optical device 10 as the first member and the substrate 20 as the second member, the projected portion 11p is completely melted with ultrasonic waves, thereby joining the optical device 10 and the substrate 20 on the flat surface 11c in a contact state with each other. The resins in the joining part of the optical device 10 and the substrate 20 are melted with ultrasonic waves, and an interface of the optical device 10 and the substrate 20 is therefore integral, and does not disturb an optical path due to reflection loss. As will be obvious from the present embodiment and the above-mentioned respective embodiments, the projected portion may be formed at least before the joining, or may be completely melted after the joining, alternatively, only a part may be melted and another part may remain even after the joining.

Note that also in the present embodiment, like the second embodiment, the plurality of optical devices 10 may also be aligned to one substrate 20.

### [Sixth Embodiment]

Hereinbelow, a description will be given of a joined body according to a sixth embodiment. Note that the joined body according to the sixth embodiment is obtained by partly changing the joined body according to the first and fifth embodiments, and matters that are not particularly described are similar to those according to the first and fifth embodiments.

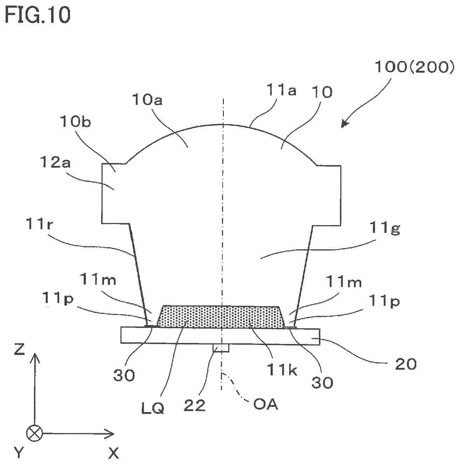

As illustrated in FIG. 10, in the present embodiment, in the joined body 100, liquid LQ is enclosed in sealed space formed between the optical device 10 as the first member and the substrate 20 as the second member. As the liquid LQ, for example, liquid resin (material without an initiator for ultraviolet hardening or thermal hardening), oil, or the like is used.

In the optical device 10, the lens element 10a has the light guiding unit 11g on the side of the substrate 20, in place of the second optical surface 11b according to the first embodiment. The light guiding unit 11g is column-shaped, and has a recessed portion 11k to be filled with the liquid LQ at the bottom end. The projected portion 11p is arranged to an outer circumferential portion 11m of the light guiding unit 11g. Further, the light-shielding unit 11r for preventing the entering of ambient light is formed to a side surface of the light guiding unit 11g. The liquid LQ is filled to the recessed portion 11k before the joining, and the optical device 10 and the substrate 20 are joined in a sandwiching state of the liquid LQ therebetween.

The substrate 20 is a plate-shaped. If a joining surface of the optical device 10 and the substrate 20 is large, warpage or the like can be generated in the substrate 20. Therefore, the joining surface is limited to the outer circumference, and for example, the liquid LQ with the same refractive index as that of the optical device 10 is enclosed to the inside thereof, thereby preventing the disturbance of an optical path due to reflection loss.

Note that also in the present embodiment, like the second embodiment, the plurality of optical devices 10 may be arranged to one substrate 20.

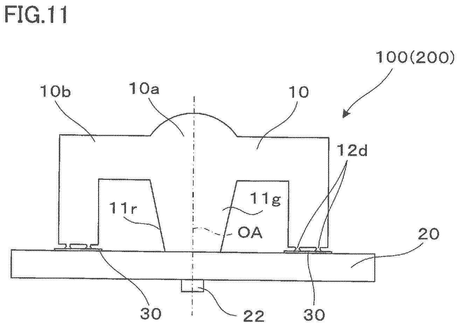

The joined body and the like according to the embodiments have been described above. However, the joined body and the like according to the present invention are not limited to the foregoing. For example, in the above-described embodiments, the shape and size of the optical devices 10 and 50 can be appropriately changed according to applications and functions. For example, as illustrated in FIG. 11, in the optical device 10 illustrated in FIG. 1, the lens element 10a may have the light guiding unit 11g as illustrated in FIG. 9A or the like.

Further, in the above-described embodiments, the first member and the second member are not limited to the optical device 10 and the substrate 20, respectively, and can be appropriately changed according to applications.

Furthermore, in the above-described embodiments, the projected portions 12d and 11p may not be provided for the optical device 10, but, for example, a fine wiring may be formed by using wire bonding or the like for the substrate 20 and be set as a vibration core of ultrasonic waves.

Moreover, in the above-described second embodiment, the example has been given that the plurality of optical devices 10 is arranged to one substrate 20. However, the optical device 10 is not limited to an array-like optical device, and the plurality of optical devices 10 having one lens element 10a as described in the first embodiment may be arranged or a plurality of lamination of the optical devices 10 and 50 as described in the third embodiment may be arranged. Further, the joined body 100 according to the second embodiment may be cut to form individual pieces of the joined body.

## Claims

1. A joined body comprising a first member made of a thermoplastic resin and a second member made of an inorganic material, wherein:
a molecular adhesive layer is provided between the first member and the second member; and
the first member is locally melted with ultrasonic waves, thereby chemically being joined to the second member via the molecular adhesive layer.

2. The joined body according to claim 1, wherein the molecular adhesive layer is made of a silane coupling agent.

3. The joined body according to any one of claims 1 and 2, wherein the first member has a projected portion on a side of the second member at least before joining.

4. The joined body according to any one of claims 1 to 3, wherein at least one of the first member and the second member is subjected to surface processing for activating molecules on facing surface of the first member or the second member.

5. The joined body according to any one of claims 1 to 4, wherein the first member and the second member have optical transparency.

6. The joined body according to any one of claims 1 to 5, wherein the first member is an optical device, and the second member is a glass substrate.

7. The joined body according to any one of claims 1 to 6, further comprising:
a third member made of a thermoplastic resin, wherein
a molecular adhesive layer is provided between the first member and the third member; and
the third member is locally melted with ultrasonic waves, thereby chemically being joined to the first member via the molecular adhesive layer.

8. The joined body according to claim 7, wherein the third member has a projected portion on a side of the first member at least before joining to the first member.

9. The joined body according to any one of claims 1 to 8, wherein the plurality of first members is bonded to the one second member.

10. The joined body according to any one of claims 1 to 9, wherein the first member and the second member are joined in a state in which the first member comes into contact with the second member on a flat surface.

11. The joined body according to any one of claims 1 to 9, wherein sealed space is formed between the first member and the second member, and liquid is enclosed in the sealed space.

12. A method for producing a joined body, comprising:
arranging a molecular adhesive layer to a surface facing a first member made of a thermoplastic resin in a second member made of an inorganic material; and
locally melting the first member with ultrasonic waves and chemically joining the first member to the second member via the molecular adhesive layer.

13. The method for producing the joined body according to claim 12, wherein the molecular adhesive layer is made of a silane coupling agent.

14. The method for producing the joined body according to any one of claims 12 and 13,
wherein the first member has a projected portion that first comes into contact with the second member when the first member is stacked on the second member before joining.

15. The method for producing the joined body according to any one of claims 12 to 14,
wherein at least one of facing surfaces of the first member and the second member is subjected to surface processing for activating molecules.

16. The method for producing the joined body according to any one of claims 12 to 15, further comprising:
joining the first member and the second member by sandwiching liquid therebetween.
